# DEMANDE DE BREVET EUROPEEN

(11) **EP 3 699 894 A1**
(43) Date de publication de la demande: **26.08.2020**
(21) Numéro de dépôt: 20157874.7
(22) Date de dépôt: 18.02.2020
(51) Int. Cl.: G09F 19/14

(54) **AFFICHE DOUBLE A STRUCTURE COMPACTE**

(30) Priorité: 21.02.2019 FR 1901721
(71) Demandeur: Rubinstein, Patrick, 75006 Paris (FR)
(72) Inventeur: Rubinstein, Patrick, 75006 Paris (FR)
(74) Mandataire: Eidelsberg, Olivier Nathan

(57) **Abrégé**

Dispositif formant affiche double comporte une plaque (1), sur la face avant de laquelle ont été apposées, dessinées ou formées de manière analogue des images (g, d) sous forme de bandelettes, la plaque étant en un matériau ayant une première dureté, la plaque étant pliée de manière à être ondulée dans la direction horizontale, caractérisé en ce que le dispositif comporte en outre une succession de nervures (4g, 4d) de section transversale de forme trapézoïdale, les nervures s'étendant sur la face arrière de la plaque (1), les nervures (4g,4d) étant en un matériau d'une deuxième dureté, la deuxième dureté étant inférieure à la première dureté.

## Description

La présente invention se rapporte à un dispositif formant affiche double, c'est-à-dire une affiche présentant deux images, dessins, motifs ou analogues, l'un que l'on peut voir lorsque l'on se trouve à la gauche de l'affiche et l'autre lorsque l'on se trouve à la droite de l'affiche.

Classiquement, et par exemple comme décrit aux documents FR 2 947 085 ou FR 3 054 069 au nom du demandeur, ce genre d'affiche ou de tableau double est constitué d'une part d'une feuille avant, sur laquelle ont été apposés, dessinés ou formés de manière analogue, des images, dessins, motifs, photographies ou analogues, sous forme de bandelettes, les bandelettes correspondant à l'image à voir de la gauche alternant avec les bandelettes correspondant à l'image à voir de la droite. La feuille est pliée pour avoir une forme ondulée de forme transversale triangulaire comportant des creux et des crêtes, de préférence avec un angle de 90°, de sorte que les flancs gauches portent les bandelettes correspondant à l'image à voir de la gauche et les flancs droits portent les bandelettes correspondant à l'image à voir de la droite. A cette feuille, classiquement en carton, il est rajouté d'autre part une plaque de support arrière de forme complémentaire à la feuille ondulée et en un matériau plus rigide pour assurer la rigidité de l'ensemble, la plaque arrière étant par exemple fixée par collage sur la face arrière de la feuille avant ondulée.

Ainsi, ces dispositifs de l'art antérieur sont compliqués à fabriquer et notamment prennent beaucoup de temps.

La présente invention vise à surmonter les inconvénients de l'art antérieur en proposant un dispositif formant affiche double, qui soit de structure plus simple, de sorte qu'il est beaucoup plus facile à fabriquer, tout en présentant une rigidité aussi bonne que les dispositifs de l'art antérieur.

La présente invention se rapporte également à un procédé pour fabriquer une affiche double de ce genre.

Suivant l'invention, un dispositif formant affiche double est tel que défini à la revendication 1, des perfectionnements et modes de réalisation préféré étant définis aux sous revendications.

Suivant un mode de réalisation préféré de l'invention, des lamelles arrières sont fixées sur la face sommet de chaque nervure, la matière de chaque lamelle arrière étant d'une troisième dureté supérieure à la deuxième dureté.

De préférence, la première dureté et la troisième dureté sont identiques.

De préférence, il est formé entre deux nervures trapézoïdales successives d'un couple de nervures sur deux un interstice sans matière, de sorte que la face arrière de la plaque apparaît à nu.

De préférence, l'épaisseur des lamelles est égale à l'épaisseur de la plaque, mesurée dans la direction perpendiculaire à la plaque lorsque celle-ci est à l'état non pliée.

De préférence, l'épaisseur des nervures, c'est-à-dire la distance de la face sommet à la face de base, est supérieure à l'épaisseur de la plaque, mesurée dans la direction perpendiculaire à la plaque lorsque celle-ci est à l'état non pliée, notamment de 5 à 15 fois supérieure, notamment 10 fois supérieure.

La présente invention se rapporte également à un procédé pour fabriquer une affiche double, notamment une affiche double suivant l'invention, tel que défini à la revendication 13.

A titre d'exemple, on décrit maintenant un mode de réalisation préféré de l'invention, en se reportant aux dessins, dans lesquels :
La figure 1 est une vue de dessus d'une affiche suivant l'invention ;
La figure 2 est une vue en coupe transversale de l'affiche de la figure 1 suivant la ligne A-A ;
La figure 3 est une vue en coupe d'un stratifié utilisé pour obtenir l'affiche des figures 1 et 2 ;
La figure 4 est une vue en coupe de l'affiche dans un état intermédiaire lors de son procédé d'obtention ;
La figure 5 est une vue en coupe transversale d'une affiche suivant un autre mode de réalisation de l'invention ;
La figure 6 est une vue en coupe transversale d'une affiche suivant encore un autre mode de réalisation de l'invention ;
La figure 7 est une vue en coupe d'encore un autre mode de réalisation d'une affiche, dans un état intermédiaire lors de son procédé d'obtention ;
La figure 8 est une vue en coupe transversale de l'affiche de la figure 7 après pliage ; et
La figure 9 est une vue en coupe d'encore un autre mode de réalisation de l'invention.

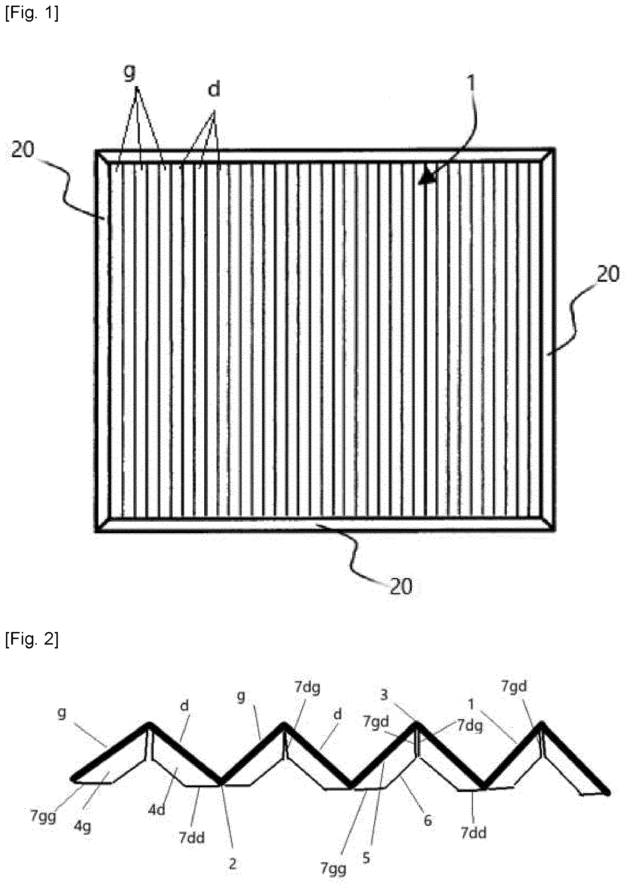

A la figure 1, il est représenté une affiche double suivant l'invention. Des bandelettes portant des images g, d, respectivement gauches et droites, ont été apposées sur la face avant du tableau. Ces images ont pu être apposées directement ou en collant des bandelettes, sur lesquelles ont été apposés les dessins, motifs, photographies ou analogue. Les bandelettes g gauches sont, en raison de l'ondulation de la face avant du tableau, tournées vers la gauche et, lorsque l'on se positionne sur la gauche du tableau, on ne voit que ces bandelettes gauches qui forment ensemble une première image gauche. Lorsque l'on se positionne à la droite du tableau, seules les bandelettes d droites apparaissent à la personne regardant le tableau et forment ensemble une deuxième image droite, qui peut être différente de la première image gauche.

A la figure 2, il est représenté, suivant une vue en coupe suivant la ligne A-A, le tableau de la figure 1.

Le tableau comporte une plaque 1 avant ondulée, les ondulations comportant des creux 2 et des crêtes 3. La forme des ondulations est, en coupe transversale, une succession de triangles, de préférence sensiblement à angle droit, l'angle α au dessin étant égal à peu près à 90°, pouvant être compris de préférence entre 75 et 105°. Sur la face arrière de la plaque 1 avant s'étendent des nervures 4d, 4g, ces nervures 4d, 4g ayant une forme en section transversale sensiblement trapézoïdale comportant une face 5 de base fixée à la face arrière de la plaque 1, par exemple par collage ou thermoformage, et une face extérieure opposée constitué d'une face 6 formant sommet parallèle à la face 5 de base et tournée vers l'arrière et de deux faces 7dd, 7gd, respectivement 7gd, 7gg, latérales inclinées d'un même angle à l'horizontale, c'est-à-dire par rapport à la face 5 avant, mais suivant des angles opposés, c'est-à-dire que les faces 7dd, 7gd, respectivement 7gd, 7gg, latérales inclinées sont orientées de manière à converger l'une vers l'autre dans la direction vers l'arrière. De préférence, les angles formés entre les faces latérales inclinées et les faces de base 5 et sommet 6 sont identiques, de sorte que les nervures 4d, 4g sont en forme de section transversale trapézoïdale isocèle.

Chaque nervure 4g a une face 7gg latérale inclinée gauche et une face 7gd latérale inclinée droite. Chaque nervure 4d a une face 7dg latérale inclinée gauche et une face 7dd latérale inclinée droite. En général, l'angle peut être compris entre 30 et 60°, notamment est égal à 45°.

Chaque face 7gd latérale inclinée droite de chaque nervure 4g gauche est parallèle à la face latérale 7dg inclinée gauche de la nervure 4d droite directement à la suite de la nervure 4g gauche, notamment en étant en contact avec elle, notamment suivant une direction parallèle à la direction avant-arrière.

Chaque face 7gg latérale inclinée gauche de chaque nervure 4g gauche est agencée de manière à être parallèle à la face 7dd latérale inclinée droite de la nervure 4d droite immédiatement précédente, notamment sensiblement horizontale.

La matière pour former les nervures est choisie de préférence de manière à être moins dure que la matière choisie pour former la plaque 1 avant. Par exemple, on peut choisir pour la plaque 1 avant de la réaliser en métal, notamment en aluminium, mais aussi en un matériau plastique ou thermoplastique, par exemple en PVC, notamment de grande dureté, en carton ou tout autre matériau analogue, tandis que l'on choisit un matériau tel qu'une matière thermoplastique, par exemple un polyéthylène ou un polypropylène ou du PVC expansé, du carton ou analogue, pour former la matière des nervures.

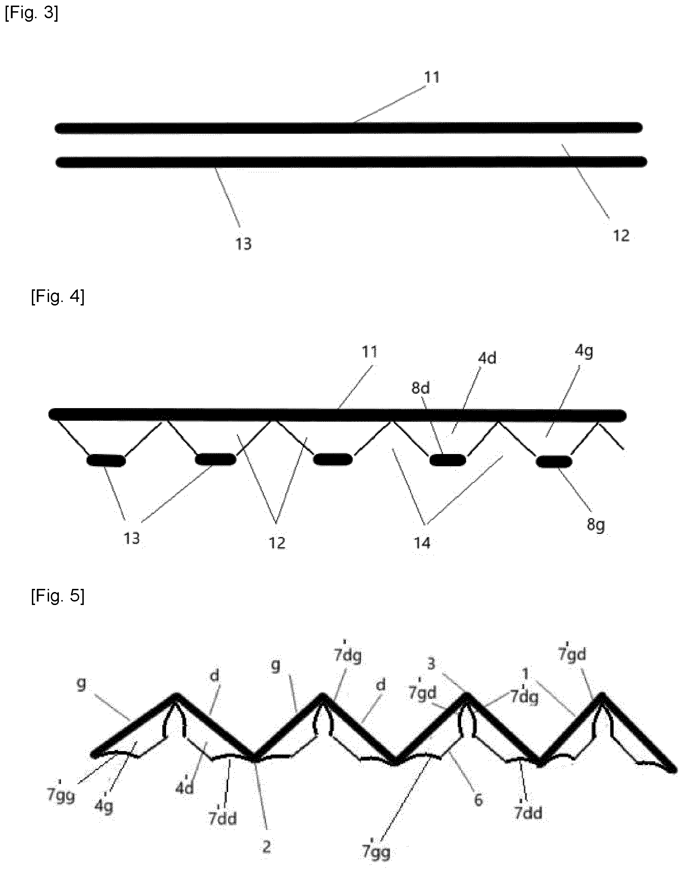

En outre, comme représentée à la figure 4, on peut recouvrir la face 6 sommet de chaque nervure d'une lamelle 8d, 8g respective en un troisième matériau, qui est également plus dur que le deuxième matériau et qui peut avoir une dureté égale à la dureté du premier matériau, sans que cela soit obligatoire.

A la figure 5, il est représenté un autre mode de réalisation d'une affiche suivant l'invention. Les nervures 4'g, 4'd n'y sont pas, comme dans le mode de réalisations des figures 1 à 4, de forme exactement trapézoïdale, mais cependant sensiblement trapézoïdale. Chaque nervure 4'd, 4'g comporte une face 5 de base fixée à la face arrière de la plaque 1, par exemple par collage ou thermoformage, et une face extérieure opposée constituée d'une face 6 formant sommet parallèle à la face 5 de base et tournée vers l'arrière et de deux faces 7'dd, 7'gd, respectivement 7'gd, 7'gg, latérales. La différence entre le mode de réalisation de la figure 2 et celui de la figure 5 est que dans ce dernier mode de réalisation, les faces latérales ne sont pas rectilignes mais incurvées en arc de cercle avec une concavité tournée dans la direction à l'opposé de la plaque 1.

Chaque face 7'gd latérale droite de chaque nervure 4'g gauche fait face à la face 7'dg latérale gauche de la nervure 4'd droite directement à la suite de la nervure 4'g gauche, notamment en étant en contact avec elle.

Chaque face 7'gg latérale gauche de chaque nervure 4'g gauche est agencée de manière à être parallèle ou sensiblement parallèle à la face 7'dd latérale droite de la nervure 4'd droite immédiatement précédente, notamment sensiblement horizontale.

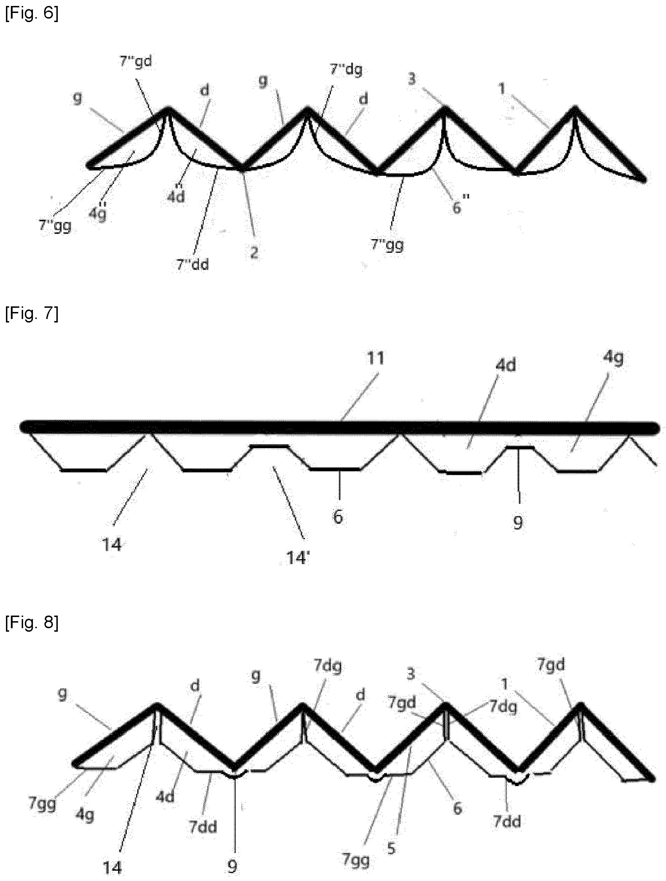

A la figure 6, il est représenté un autre mode de réalisation d'une affiche suivant l'invention. Les nervures 4"g, 4"d n'y sont pas, comme dans le mode de réalisations des figures 1 à 4, de forme trapézoïdale. Chaque nervure 4" comporte une face 5 de base fixée à la face arrière de la plaque 1, par exemple par collage ou thermoformage, et une face extérieure en forme d'arc de cercle comportant un sommet 6" central et deux faces 7"dd, 7"gd, respectivement 7"gd, 7"gg latérales, en forme d'arcs de cercle de dimension en longueur curviligne moitié de celle de la face extérieure. Les faces latérales sont incurvées en arc de cercle avec une concavité tournée vers la plaque 1.

Chaque face 7"gd latérale droite de chaque nervure 4"g gauche fait face à la face 7"dg latérale gauche de la nervure 4"d droite directement à la suite de la nervure 4"g gauche, notamment en étant en contact avec elle.

Chaque face 7"gg latérale gauche de chaque nervure 4"g gauche est agencée de manière à être parallèle ou sensiblement parallèle à la face 7"dd latérale droite de la nervure 4"d droite immédiatement précédente.

On décrit maintenant un procédé simple pour fabriquer une affiche double, notamment suivant l'invention.

Pour ce faire, on peut partir d'un stratifié 10 (représenté à la figure 3) constitué d'une couche supérieure 11 en un premier matériau d'une première dureté, notamment d'une grande dureté, par exemple métallique, par exemple en aluminium, d'une couche 12 intermédiaire en un deuxième matériau d'une deuxième dureté, la deuxième dureté étant plus petite que la première dureté, par exemple en matière thermoplastique, et d'une troisième couche 13 en un matériau d'une troisième dureté, qui est supérieure à la deuxième dureté et qui peut être égale à la première dureté. Cependant, cette troisième couche n'est qu'optionnelle, et le procédé peut être mis en œuvre dans son acception la plus large avec uniquement les deux couches 11 supérieure et 12 intermédiaire.

On forme sur la face supérieure de la couche 11 des bandelettes d'image destinées à former les bandelettes g, d de la figure 1.

On creuse, à l'aide d'une fraise de forme appropriée, dans la face arrière du stratifié 10 des rainures 14 espacées les unes des autres. Dans le cas par exemple de l'affiche de la figure 1 ou 2, ces rainures sont de forme triangulaire. Ces rainures 14, notamment triangulaires, sont réalisées de manière à atteindre la face arrière de la couche supérieure 11, voire à mettre à nu un peu de cette face arrière de la couche 11. Il est ainsi formé entre les rainures des nervures de section trapézoïdale. Une fois les rainures réalisées, on effectue un pliage du stratifié 10, pour faire en sorte que chaque nervure comportant une face de base du côté de la face arrière de la plaque et une face extérieure opposée comportant, dans le cas de rainure triangulaire, une face sommet à l'opposé de la face de base et deux faces latérales gauche et droite s'étendant entre les faces de base et sommet, les deux faces latérales gauche et droite étant inclinées sensiblement d'un même angle par rapport à la face de base, une face latérale gauche d'une nervure sur deux étant en contact ou sensiblement en contact ou sensiblement parallèle à la face latérale droite de la nervure contigüe, ou directement à la suite, tandis que la face latérale gauche de l'autre nervure sur deux étant sensiblement parallèle à la face latérale droite de la nervure contigüe, ou directement suivante. On obtient ainsi l'affiche des figures 1 et 2.

Pour obtenir par exemple l'affiche de la figure 5, il convient de former des rainures de section par exemple en arc de cercle, par exemple semi circulaire à la place des rainures triangulaires. Pour obtenir l'affiche de la figure 6, il convient de former des rainures en forme de V ayant des branches en arc de cercle à concavité tournée vers l'extérieur du V.

Aux figures 7 et 8, il est représenté une affiche suivant un mode de réalisation avantageux par rapport notamment à celui de la figure 2. Alors qu'à la figure 2, toutes les rainures triangulaires 14 ont été creusées pour atteindre la matière de la plaque 1, à la figure 7, les rainures 14' sont creusées en laissant dans le fond un peu de la matière de la couche intermédiaire 12 dans une rainure sur deux, les autres rainures 14 (également une sur deux) étant réalisées comme dans le mode de réalisation de la figure 2. Ainsi, les rainures 14' ont-elles un fond plat 9. On obtient ainsi une affiche plus résistante.

Toutes les faces latérales rectilignes gauches, respectivement droites, des rainures sont mutuellement parallèles, mais pour une 14' rainure sur deux, on fait s'arrêter ces faces latérales à distance de la plaque 1, en laissant ainsi une épaisseur de matière intermédiaire entre la rainure 14' et la plaque 1. Par exemple, on peut laisser une épaisseur de matière intermédiaire de l'ordre de 0,2 à 0,3 mm et avoir un fond plat pour la rainure 14' de l'ordre du millimètre.

A la figure 8, il est représenté l'affiche de la figure 7 à l'état intermédiaire après formation des rainures et avant pliage. Comme on le voit, la matière de la couche 12 intermédiaire entre le fond 9 et la plaque 1, après pliage vient former au niveau des bases de l'affiche une sorte de renflement protégeant et renforçant ces bases.

Le principe de laisser un peu de la matière intermédiaire dans une rainure sur deux pour rendre l'affiche plus résistante peut s'appliquer aussi aux autres modes de réalisation décrits dans la présente demande.

On peut choisir, pour la plaque 1 avant, de prévoir une épaisseur (mesurée, en chaque point, dans la direction perpendiculaire à la plaque 1, c'est-à-dire perpendiculairement au plan de l'image g ou d) comprise entre 0,1 et 1 mm, notamment entre 0,2 et 0,5mm. Pour la couche 12 intermédiaire, on peut choisir une épaisseur comprise entre 1 et 5 mm, par exemple 2,5mm. Pour la troisième couche 13, on peut choisir une épaisseur de préférence égale à celle de la plaque 1 avant, par exemple comprise entre 0,1 et 0,5 mm, par exemple 0,2mm.

Comme représentée aux figures, on peut entourer la plaque d'une cadre 20.

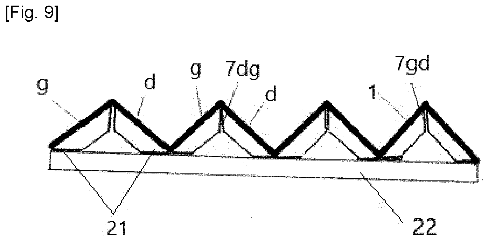

A la figure 9, il est représenté un autre mode de réalisation suivant l'invention, mettant en œuvre, par rapport au mode de réalisation décrit à la figure 2 un perfectionnement. Ce même perfectionnement peut aussi être mis en œuvre dans chacun des autres modes de réalisation des figures 4 à 8. A la figure 9, il a été rajouté à la face arrière du dispositif (c'est-à-dire du côté à l'opposé des images) une plaque 22 supplémentaire, collée par des couches 21 de colle respectives aux faces 7dd et 7gg latérales des nervures, pour ainsi rigidifier encore plus le dispositif, et notamment s'assurer de la bonne stabilité de l'angle des coins des creux et des crêtes 2 et 3.

A la place de la plaque 22, on pourrait prévoir une couche de résine ou de colle venant remplir les espaces de section triangulaire formés dans la face arrière du dispositif pour ainsi, une fois la résine durcie, assurer la stabilité de l'angle des coins, notamment à environ 90°, valeur la plus appropriée pour une vision optimale des deux images gauche et droite.

Prévoir la plaque 22 ou une couche de résine ou tout autre système analogue pour conserver la stabilité de l'angle des coins est particulièrement utile notamment dans le cas où les matières choisies pour la plaque 1, pour les nervures et éventuellement pour la plaque 3, n'ont pas une grande dureté, par exemple lorsque la plaque 1 est en PVC et les nervures en PVC expansé.

Dans la présente demande, on a décrit des modes de réalisations réalisés avec des rainures toutes identiques. Cependant, on pourrait également réaliser les rainures avec des formes différentes les unes des autres, sans pour autant sortir du domaine de la présente invention, par exemple faire une rainure sur deux triangulaire, et une rainure sur deux en arc de cercle. En outre, la forme de surfaces latérales n'est pas limitée à des segments rectilignes ou en arc de cercle, et d'autres formes peuvent être prévues sans pour autant sortir du domaine de la présente invention.

## Revendications

1. Dispositif formant affiche double comporte une plaque (1), sur la face avant de laquelle ont été apposées, dessinées ou formées de manière analogue des images (g, d) sous forme de bandelettes, les bandelettes s'étendant suivant une direction verticale et les bandelettes alternant entre des bandelettes dites gauches et des bandelettes dites droites, l'ensemble des bandelettes dites gauches correspondant ensemble à une image, dessin, motif, photographie ou analogue destiné à être vu de la gauche et les bandelettes dites droites correspondant ensemble à une image, dessin, motif ou analogue destiné à être vu de la droite, la plaque étant pliée de manière à être ondulée dans la direction horizontale, les ondulations étant constituées en section transversale par des formes en triangle ou coin, chaque forme en coin ayant un flanc gauche et un flanc droit, l'ensemble des flancs gauches portant les bandelettes gauches et l'ensembles des flancs droits portant les bandelettes droites, **caractérisé en ce que** le dispositif comporte en outre une succession de nervures (4g, 4d ; 4'g, 4'd ; 4"g, 4"d) ayant s'étendant sur la face arrière de la plaque, chaque nervure comportant une face (5) de base du côté de la face arrière de la plaque et une face extérieure (6, 7gg, 7gd, 7dg, 7dd ; 6, 7'gg, 7'gd, 7'dg, 7'dd ; 6", 7"gg, 7"gd, 7"dg, 7"dd) opposée à la face de base, la face extérieure comportant un sommet (6 ; 6") et deux faces (7gg, 7gd, 7dg, 7dd ; 7'gg, 7'gd, 7'dg, 7'dd ; 7"gg, 7"gd, 7"dg, 7"dd) latérales gauche et droite s'étendant entre la face de base et le sommet (6 ; 6"), une face latérale (7dg ; 7'dg ; 7"dg) gauche d'une nervure sur deux faisant face ou sensiblement face à la face latérale (7gd ; 7'gd ;7"gd) droite de la nervure contigüe, ou directement à la suite, notamment en étant en contact mutuel, tandis que la face latérale (7gg ; 7'gg ; 7"gg) gauche de l'autre nervure sur deux étant alignée ou sensiblement alignée avec la face latérale (7dd ; 7'dd ;7"dd) droite de la nervure contigüe, ou directement suivante.

2. Dispositif formant affiche double suivant la revendication 1, **caractérisé en ce que** chaque nervure est de section transversale de forme trapézoïdale, la face extérieure comportant une face rectiligne formant le sommet (6) à l'opposé de la face de base et deux faces (7gg, 7gd, 7dg, 7dd) latérales gauche et droite rectilignes s'étendant entre les faces de base et sommet, les deux faces latérales rectilignes gauche et droite étant inclinées par rapport à la face (5) de base et à la face formant sommet (6), une face latérale (7dg) gauche d'une nervure sur deux étant en contact ou sensiblement en contact ou sensiblement parallèle à la face latérale (7gd) droite de la nervure contigüe, ou directement à la suite, tandis que la face latérale (7gg) gauche de l'autre nervure sur deux étant alignée ou sensiblement alignée à la face latérale (7dd) droite de la nervure contigüe, ou directement suivante.

3. Dispositif suivant la revendication 2, **caractérisé en ce que** les deux faces latérales rectilignes gauche et droite sont inclinées sensiblement d'un même angle par rapport à la face de base et à la face formant sommet (6).

4. Dispositif suivant la revendication 2 ou 3, **caractérisé en ce que** la plaque étant en un matériau ayant une première dureté, de préférence une grande dureté, par exemple métallique, par exemple en aluminium, et les nervures étant en un matériau d'une deuxième dureté, la deuxième dureté étant inférieure à la première dureté, par exemple en matière thermoplastique, par exemple en polyéthylène ou en polypropylène ou analogue.

5. Dispositif suivant l'une des revendications 1 à 4, **caractérisé en ce que** des lamelles (8g, 8d) arrières sont fixées sur le sommet (6) de la face extérieure de chaque nervure de la section trapézoïdale, la matière de chaque lamelle arrière étant d'une troisième dureté, la troisième dureté étant supérieure à la deuxième dureté.

6. Dispositif suivant la revendication 5, **caractérisé en ce que** la première dureté et la troisième dureté sont identiques.

7. Dispositif suivant l'une des revendications précédentes, **caractérisé en ce qu'**il est formé entre deux nervures, notamment trapézoïdales, successives d'un couple de nervures sur deux un interstice sans matière, de sorte que la face arrière de la plaque avant apparaît à nu.

8. Dispositif suivant l'une des revendications précédentes, **caractérisé en ce qu'**il est formé entre deux nervures, notamment trapézoïdales, successives d'un couple de nervures sur deux une région (9) avec matière, de sorte que la face arrière de la plaque avant n'apparait pas à nu.

9. Dispositif suivant l'une des revendications précédentes, **caractérisé en ce que** l'angle au sommet de la forme en coin est compris entre 75 et 105°, notamment environ 90°.

10. Dispositif suivant l'une des revendications 2 à 9, **caractérisé en ce que** la section trapézoïdale est isocèle.

11. Dispositif suivant l'une des revendications 5 à 10, **caractérisé en ce que** l'épaisseur des lamelles est égale à l'épaisseur de la plaque, mesurée dans la direction perpendiculaire à la plaque lorsque celle-ci est à l'état non pliée.

12. Dispositif suivant l'une des revendication précédentes, **caractérisé en ce que** l'épaisseur des nervures, c'est-à-dire la distance du sommet à la face de base, est supérieure à l'épaisseur de la plaque, mesurée dans la direction perpendiculaire à la plaque lorsque celle-ci est à l'état non pliée, notamment de 5 à 15 fois supérieure, notamment 10 fois supérieure.

13. Procédé pour fabriquer une affiche double, notamment suivant l'une des revendications précédentes, comportant les étapes dans lesquelles :
- on prend une plaque constituée d'un stratifié, le stratifié étant constitué par la superposition d'au moins deux couches, une couche (11) supérieure en un premier matériau, notamment ayant une première dureté, notamment une grande dureté, par exemple métallique, par exemple en aluminium et une couche (12) inférieure de matière d'une deuxième dureté inférieure à la première dureté, par exemple en matière thermoplastique, et on lui donne une forme classique de tableau rectangulaire ou carré et on y appose ou dessine ou forme de manière analogue des images, dessins, motifs, photographies ou analogues, sous la forme de bandelettes parallèles les unes aux autres suivant une direction dite verticale, les bandelettes alternant entre des bandelettes dites gauches et des bandelettes dites droites, l'ensemble des bandelettes dites gauches correspondant à une première image destinée à être vue de la gauche et l'ensemble des bandelettes dites droites correspondant à une deuxième image, de préférence différente de la première image, destinée à être vue de la droite ;
- on creuse des rainures (14; 14, 14'), notamment de section triangulaire, s'étendant à distance les unes des autres dans la direction verticale dans la face arrière de la couche (12) inférieure du stratifié, de sorte que des fonds de rainures, notamment les fonds de chaque rainure, sont formés par la matière à nu de la face inférieure de la couche (11) supérieure, les fonds des rainures étant positionnés pour correspondre aux lignes de démarcation entre deux bandelettes gauche et droite successives ; et
- on plie le stratifié pour faire en sorte que entre deux rainures (14 ; 14, 14'), notamment de section triangulaire, successives soient formées des nervures (4g, 4d ; 4'g,4'd ; 4"g,4"d) comportant chacune une face (5) de base du côté de la face arrière de la couche (11) et une face extérieure comportant un sommet (6 ; 6") à l'opposé de la face de base et deux faces latérales (7gd, 7gg, 7dg, 7dd ; 7'gd, 7'gg, 7'dg, 7'dd ; 7"gd, 7"gg, 7"dg, 7"dd) gauche et droite s'étendant entre la face de base et le sommet, une face latérale gauche d'une nervure sur deux faisant face ou sensiblement face à la face latérale droite de la nervure contigüe, ou directement à la suite, tandis que la face latérale gauche de l'autre nervure sur deux étant alignée ou sensiblement alignée avec la face latérale droite de la nervure contigüe, ou directement suivante, pour ainsi obtenir l'affiche finale.

14. Procédé pour fabriquer une affiche double suivant la revendication 13, **caractérisé en ce que** dans une rainure (14') sur deux, on laisse de la matière de la couche (12) entre le fond (9) de la rainure et la couche (11).

15. Procédé pour fabriquer une affiche double suivant la revendication 13 ou 14, **caractérisé en ce que** dans une rainure sur deux, on ne laisse pas de matière de la couche (12) au fond de la rainure, de sorte que la couche (11) apparait à nue.
